# EUROPEAN PATENT APPLICATION

(11) **EP 4 756 185 A1**
(43) Date of publication of application: **10.06.2026**
(21) Application number: 25220579.4
(22) Date of filing: 03.12.2025
(51) Int. Cl.: F01D 11/24, F02C 6/08, F02C 9/18

(54) **OPEN ROTOR GAS TURBINE ENGINE WITH ADAPTIVE TURBINE CLEARANCE CONTROL SYSTEM AND METHOD**

(30) Priority: 03.12.2024 US 202418966979
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

A gas turbine engine (20) disposed within a nacelle (40) includes an open rotor propulsion system (28), compressor (30), combustion (32), and turbine (34) sections, and a turbine active clearance control system (54). The turbine section has a turbine case clearance control segment (46A) disposed radially outside of a rotor stage (44). The turbine active clearance control system includes a bleed air mixing system (60), a nacelle air inlet device (56), and a compressor air bleed structure (58). The turbine active clearance control system is configurable in a turbine case heating mode in which the bleed air mixing system is used to mix an exterior air flow and a compressor bleed air flow to produce a conditioned air flow that is operable to heat the turbine case clearance control segment, and the turbine active clearance control system is configured to direct the conditioned air flow to the turbine case.

## Description

### BACKGROUND OF THE INVENTION

### 1. Technical Field

The invention relates to gas turbine engines in general and to turbine clearance control systems and methods in particular.

### 2. Background Information

Aircraft gas turbine engines are often configured to have a turbine rotor blade tip clearance that accounts for a maximum amount of centrifugal radial rotor blade growth, a maximum amount of rotor stage thermal growth, and a thermal disparity between the rotor stage and the turbine case structure radially outside of the rotor stage. Basing the rotor tip clearance on maximum values can facilitate avoiding a pinch condition between the rotor blade tips and the turbine case structure. Engine efficiency is, however, affected by blade tip clearance. It would be useful to provide a system and method for actively controlling turbine rotor blade tip clearance.

### SUMMARY

According to an aspect of the invention, a gas turbine engine disposed, or at least partially disposed, within a nacelle is provided that includes an open rotor propulsion system, a compressor section, a combustion section, a turbine section, and a turbine active clearance control system. The turbine section has a rotor stage and a turbine case clearance control segment disposed radially outside of the rotor stage. The turbine active clearance control system includes a bleed air mixing system, an air inlet device in fluid communication with an exterior wall of the nacelle and configured to receive an exterior air flow, and a compressor air bleed structure in fluid communication with the compressor section to receive a compressor bleed air flow. The turbine active clearance control system is configurable in a turbine case heating mode in which the bleed air mixing system is used to mix the exterior air flow and the compressor bleed air flow to produce a conditioned air flow that is operable to heat the turbine case clearance control segment, and the turbine active clearance control system is configured to direct the conditioned air flow to the turbine case clearance control segment.

In an embodiment of the above, the bleed air mixing system may include a flow mixing device and a controllable compressor bleed air valve in fluid communication with the compressor air bleed structure and with the flow mixing device.

In an embodiment of any of the above, the compressor bleed air valve may be controllable to vary a first volumetric flow rate of the compressor bleed air flow through the compressor bleed air valve in a range between a fully open compressor bleed air valve configuration and a closed compressor bleed air valve configuration, including a plurality of partially open compressor bleed air valve configurations. The first volumetric flow rate at each partially open compressor bleed air valve configuration may be less than the first volumetric flow rate at the fully open compressor bleed air valve configuration and greater than the first volumetric flow rate at the closed compressor bleed air valve configuration.

In an embodiment of any of the above, the bleed air mixing system may include an exterior air valve in fluid communication with the air inlet device and with the flow mixing device.

In an embodiment of any of the above, the exterior air valve may be controllable to vary a second volumetric flow rate of the exterior air flow through the exterior air valve in a range between a fully open exterior valve configuration and a closed exterior valve configuration, including a plurality of partially open exterior valve configurations. The second volumetric flow rate at each partially open exterior valve configuration may be less than the second volumetric flow rate at the fully open exterior valve configuration and greater than the second volumetric flow rate at the closed exterior valve configuration.

In an embodiment of any of the above, the turbine section may include a high pressure turbine (HPT) section, and the rotor stage may include a HPT rotor stage, and the turbine case clearance control segment may include a HPT case clearance control segment disposed radially outside of the HPT rotor stage. The turbine active clearance control system may be configured to selectively direct the conditioned air flow to the HPT case clearance control segment.

In an embodiment of any of the above, the turbine section may include a low pressure turbine (LPT) section, and the rotor stage may include an LPT rotor stage, and the turbine case clearance control segment may include a LPT case clearance control segment disposed radially outside of the LPT rotor stage. The turbine active clearance control system may be configured to selectively direct the conditioned air flow to the LPT case clearance control segment.

In an embodiment of any of the above, the turbine active clearance control system may include a turbine section valve controllable to pass the conditioned air flow solely to the HPT case clearance control segment, or solely to the LPT case clearance control segment, or to pass a first volumetric flow rate of the conditioned air flow to the HPT clearance control segment and a second volumetric flow rate of the conditioned air flow to the LPT case clearance control segment.

In an embodiment of any of the above, the turbine section valve may be controllable to vary the first and second volumetric flow rates.

In an embodiment of any of the above, the open rotor propulsion system may include an open rotor propulsion rotor with a plurality of rotor blades and a plurality of stator vanes disposed aft of the open rotor propulsion rotor.

This aspect may also extend to an assembly comprising a nacelle and the gas turbine engine as described above or herein and/or claimed in any of claims 1 to 10, the gas turbine engine disposed, or at least partially disposed, within the nacelle.

According to an aspect of the invention, a gas turbine engine disposed , or at least partially disposed, within a nacelle is provided that includes an open rotor propulsion system, a compressor section, a combustion section, a turbine section, and a turbine active clearance control system. The turbine section has a rotor stage and a turbine case clearance control segment disposed radially outside of the rotor stage. The turbine active clearance control system includes a bleed air mixing system, an air inlet device in fluid communication with an exterior wall of the nacelle to receive an exterior air flow, and a compressor air bleed structure in fluid communication with the compressor section to receive a compressor bleed air flow. The bleed air mixing system includes a flow mixing device, a compressor bleed air valve, and an exterior air valve. The compressor bleed air valve is in fluid communication with the compressor air bleed structure and the flow mixing device. The flow mixing device is in fluid communication with the air inlet device and the flow mixing device. The turbine active clearance control system is configurable in a turbine case heating mode and in a turbine case cooling mode. In the turbine case heating mode, the turbine active clearance control system is configured to control the bleed air mixing system to mix the exterior air flow and the compressor bleed air flow to produce a first conditioned air flow that is operable to heat the turbine case clearance control segment. In the turbine case cooling mode, the turbine active clearance control system is configured to control the bleed air mixing system to mix the exterior air flow and the compressor bleed air flow to produce a second conditioned air flow that is operable to cool the turbine case clearance control segment. In the turbine case heating mode or in the turbine case cooling mode, the turbine active clearance control system is configured to direct the first conditioned air flow or the second conditioned air flow to the turbine case clearance control segment.

In an embodiment of the above, the compressor bleed air valve is controllable to vary a first volumetric flow rate of the compressor bleed air flow through the compressor bleed air valve in a range between a fully open compressor bleed air valve configuration and a closed compressor bleed air valve configuration, including a plurality of partially open compressor bleed air valve configurations, wherein the first volumetric flow rate at each partially open compressor bleed air valve configuration is less than the first volumetric flow rate at the fully open compressor bleed air valve configuration and greater than the first volumetric flow rate at the closed compressor bleed air valve configuration.

In an embodiment of any of the above, the exterior air valve is controllable to vary a second volumetric flow rate of the exterior air flow through the exterior air valve in a range between a fully open exterior air valve configuration and a closed exterior air valve configuration, including a plurality of partially open exterior air valve configurations, wherein the second volumetric flow rate at each said partially open exterior air valve configuration is less than the second volumetric flow rate at the fully open exterior air valve configuration and greater than the second volumetric flow rate at the closed exterior air valve configuration.

In an embodiment of any of the above, the turbine section includes a high pressure turbine (HPT) section, and the rotor stage includes a HPT rotor stage, and the turbine case clearance control segment includes a HPT case clearance control segment disposed radially outside of the HPT rotor stage, and the turbine active clearance control system is configured to selectively direct the first conditioned air flow or the second conditioned air flow to the HPT case clearance control segment.

In an embodiment of any of the above, the turbine section includes a low pressure turbine (LPT) section, and the rotor stage includes an LPT rotor stage, and the turbine case segment includes a LPT case segment disposed radially outside of the LPT rotor stage, and the turbine active clearance control system is configured to selectively direct the first conditioned air flow or the second conditioned air flow to the LPT case segment.

In an embodiment of any of the above, the turbine active clearance control system includes a turbine section valve controllable to pass the first conditioned air flow or the second conditioned air flow solely to the HPT case segment, or solely to the LPT case segment, or to pass a first volumetric flow rate of the first conditioned air flow or the second conditioned air flow to the HPT case segment and a second volumetric flow rate of the first conditioned air flow or the second conditioned air flow to the LPT case segment.

This aspect may also extend to an assembly comprising a nacelle and the gas turbine engine as described above or herein and/or claimed in claim 11, the gas turbine engine disposed, or at least partially disposed, within the nacelle.

According to an aspect of the invention, a method of actively controlling rotor tip clearance in a gas turbine engine disposed, or at least partially disposed, in a nacelle is provided. The gas turbine engine includes an open rotor propulsion system, a compressor section, a combustion section, and a turbine section having a rotor stage and a turbine case clearance control segment disposed radially outside of the plurality of the rotor stage. The method includes: providing an exterior air flow extracted from an exterior of the nacelle to a flow mixing device; providing a compressor bleed air flow from the compressor section to the flow mixing device; using the flow mixing device to mix the exterior air flow and the compressor bleed air flow to produce a conditioned air flow that is operable to heat the turbine case clearance control segment; and directing the conditioned air flow to heat the turbine case clearance control segment.

In an embodiment of the above, the step of providing the exterior air flow extracted from the exterior of the nacelle to the flow mixing device may include using an exterior air valve to vary an exterior air volumetric flow rate into the flow mixing device.

In an embodiment of any of the above, the step of providing the compressor bleed air flow from the compressor section to the flow mixing device may include using a compressor bleed air valve to vary a compressor bleed air volumetric flow rate into the flow mixing device.

In an embodiment of any of the above, the exterior air flow may be provided at a first pressure level, and the compressor bleed air flow may be provided at a second pressure level, and the conditioned cooling air flow may be produced at a third pressure level, wherein the second pressure level is greater than the first pressure level and the third pressure level, and the third pressure level is greater than the first pressure level.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine embodiment.
FIG. 2 is a diagrammatic partial illustration of a turbine section embodiment.
FIG. 3 is a diagrammatic sectional view of a gas turbine engine according to an embodiment of the present disclosure.
FIG. 4 is a diagrammatic view of a present disclosure flow mixing device.
FIG. 5 is a diagrammatic sectional view of a gas turbine engine according to an embodiment of the present disclosure.
FIG. 6 is a diagrammatic sectional view of a gas turbine engine according to an embodiment of the present disclosure.
FIG. 7 is a diagrammatic sectional view of a gas turbine engine according to an embodiment of the present disclosure.
FIG. 8 is a diagrammatic sectional view of a gas turbine engine according to an embodiment of the present disclosure.

### DETAILED DESCRIPTION

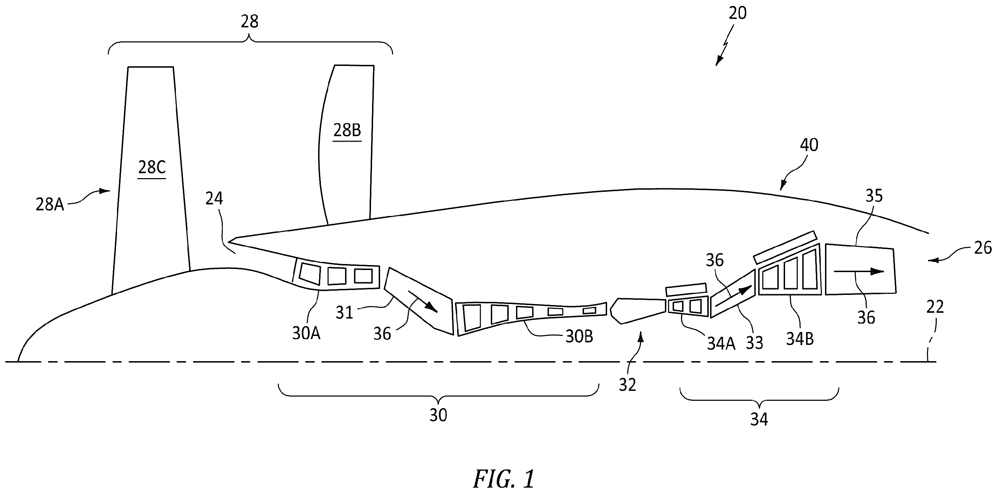

FIG. 1 shows a diagrammatic view of a gas turbine engine 20 in an open rotor configuration. The gas turbine engine 20 extends along an axial centerline 22. The gas turbine engine 20 includes an upstream airflow inlet 24, a downstream exhaust 26, an open rotor propulsion system 28, a compressor section 30, a combustion section 32, and a turbine section 34. The open rotor propulsion ("ORP") system 28 includes an ORP rotor 28A and a plurality of stator vanes 28B (sometimes referred to as "swirl recovery vanes" or "SRVs") that are disposed aft of the ORP rotor 28A. The ORP rotor 28A includes a plurality of ORP blades 28C. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A is connected to and driven by the LPT 34B through a low-speed shaft (not shown). The HPC 30B is connected to and driven by the HPT 34A through a high-speed shaft (not shown). The ORP rotor 28A may be driven by the low-speed shaft (not shown); e.g., indirectly with a reduction gear box in drive communication with both the low-speed shaft and the ORP rotor 28A. The present disclosure is not limited to any particular ORP system 28 configuration.

Air enters the core gas path 36 of the gas turbine engine 20 through an airflow inlet 24 disposed aft of the ORP rotor 28A. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The gas turbine engine 20 is diagrammatically shown in FIG. 1 disposed within a nacelle structure 40.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1.

The terms "forward", "leading", "aft, "trailing" are used herein to indicate the relative position of a component or surface. As air passes through the engine 20, a leading edge of a stator vane or rotor blade encounters the air before the trailing edge of the same. In a conventional axial engine such as that shown in FIG. 1, the compressor section 30 is forward of the turbine section 34 and the turbine section 34 is aft of the compressor section 30. The terms "inner radial" and "outer radial" refer to relative radial positions from the engine centerline. An inner radial component or path is disposed radially closer to the engine centerline than an outer radial component or path.

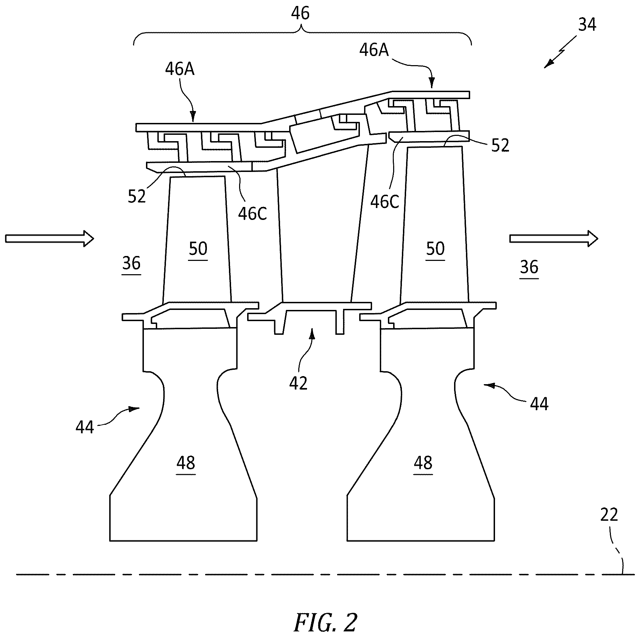

FIG. 2 diagrammatically illustrates a portion of a turbine section 34 including a stator vane stage 42 disposed between a pair of rotor stages 44. A turbine case 46 is disposed radially outside of the stator vane stage 42 and the rotor stages 44. Each rotor stage 44 includes a disk 48 rotatable about the axial engine centerline, with a plurality of rotor blades 50 that extend radially out from the disk 48 and into the core gas path 36. Each rotor blade 50 includes a blade tip 52 at the outer radial end of an airfoil portion of the rotor blade 50. The arrows shown in FIG. 2 illustrate the direction of core gas passing through the turbine section 34 along the core gas path 36. To facilitate the description herein, the portion of the turbine case 46 disposed radially outside of a turbine rotor stage 44 will be referred to as a "turbine case clearance control segment 46A". The turbine case clearance control segment 46A includes a blade outer air seal 46C disposed immediately radially outside of each rotor stage 44. The turbine section 34 shown in FIG. 2 is provided herewith to diagrammatically illustrate an arrangement of rotor stages and stator vane stages within a turbine section 34 and turbine case clearance control segment 46A disposed radially outside of the turbine rotor stages 44. The present disclosure is not limited to any turbine section 34 configuration other than as described herein.

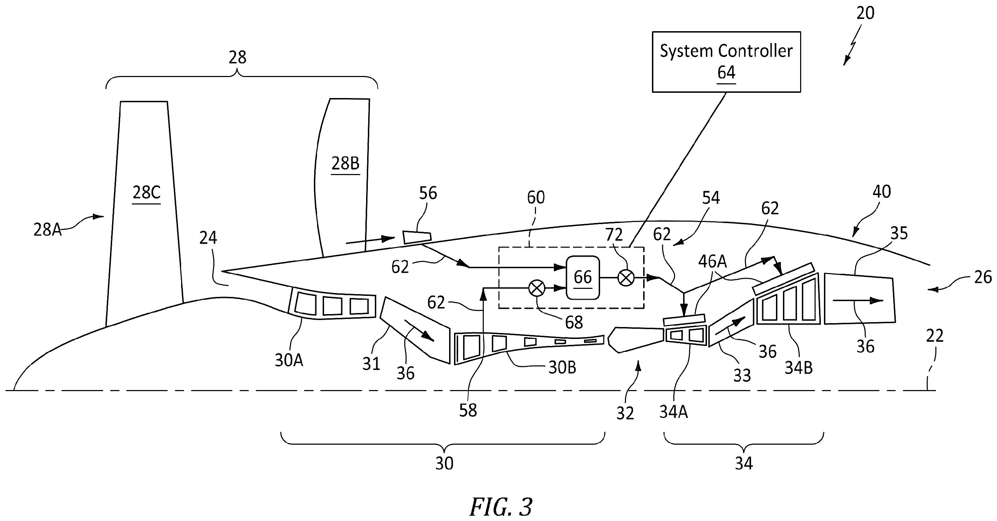

FIG. 3 diagrammatically illustrates an embodiment of a turbine active clearance control (ACC) system 54 that may be used in the present disclosure. The turbine ACC system 54 includes an air inlet device 56, a compressor air bleed structure 58, and a bleed air mixing (BAM) system 60. As will be described herein, air conduits 62 (e.g., air passages formed by interior structural panels, tubes, or the like, or any combination thereof) provide fluid communication between the turbine ACC system 54 components. In some embodiments, additional fluid flow components (e.g., valves, filters, and the like) may be included. In some embodiments, the turbine ACC system 54 may include or be in communication with a system controller 64 for control of turbine ACC system 54 components.

The air inlet device 56 is engaged with an exterior wall of the nacelle 40 and is configured to extract air from outside the nacelle and pass the extracted air to the BAM system 60 through a conduit 62. In some embodiments, the air inlet device 56 may include an orifice disposed in the exterior wall of the nacelle 40. In some embodiments, the air inlet device 56 may include a scoop or other structure that is engaged with the exterior wall of the nacelle 40; e.g., a scoop oriented to collect air disposed outside of the nacelle 40. The present disclosure is not limited to any particular air inlet device 56 configuration. The conduit extends from the air inlet device 56 to the BAM system 60.

The compressor air bleed structure 58 is engaged with a compressor section 30 of the engine 20 and is configured to extract air (i.e., "compressor bleed air") from the compressor section 30 and pass the extracted compressor bleed air to the BAM system 60 through an air conduit 62.

Core gas flow worked within the compressor section 30 increases in pressure as it passes through each sequential compressor rotor stage. The present disclosure contemplates that the specific position at which the compressor air bleed structure 58 is engaged with the compressor section 30 (e.g., which sequential compressor rotor stage) may be chosen based on the magnitude of the compressor air pressure available at that specific position, as well as other factors. FIG. 3 illustrates the compressor air bleed structure 58 engaged with the HPC 30B as a non-limiting example of where the compressor air bleed structure 58 may be engaged with the compressor section 30. In some embodiments, the magnitude of the compressor air pressure available at a position in the LPC 30A may be adequate for use in the present disclosure turbine ACC system 54. Hence, the present disclosure is not limited to being engaged with the HPC 30B. Moreover, in an application wherein a compressor section 30 (LPC 30A, HPC 30B) includes a plurality of compressor rotor stages, the magnitude of the compressor air pressure available will increase with the sequential compression section 30 rotor stages. The present disclosure contemplates that the compressor air bleed structure 58 may be engaged at different compressor rotor stage positions to provide compressor bleed air at different pressures. In this manner, the present disclosure can be adapted to satisfy different turbine ACC system 54 requirements.

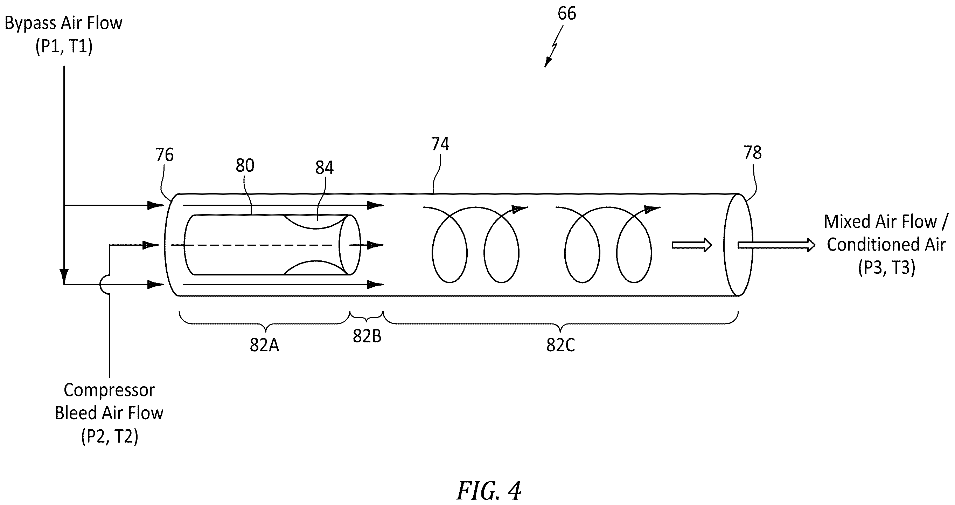

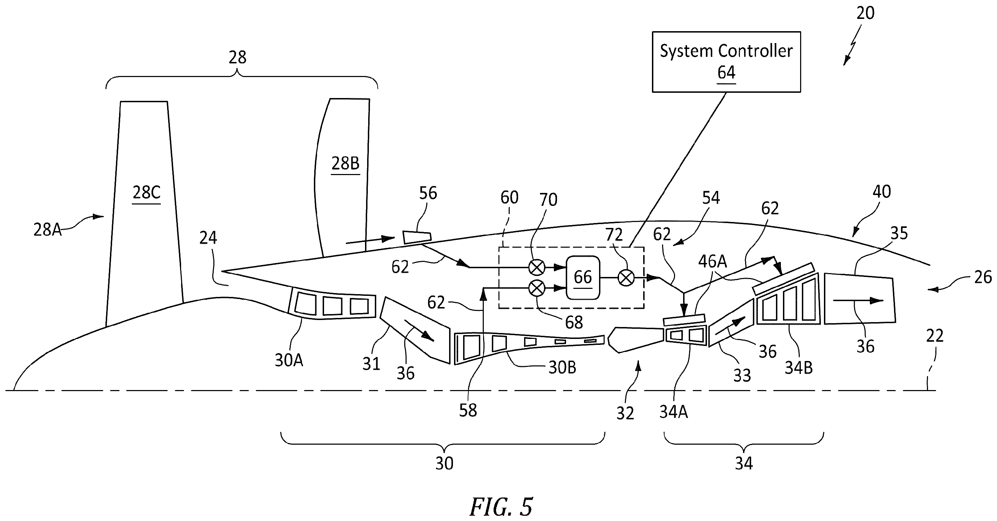

The bleed air mixing (BAM) system 60 is configured to receive an exterior air flow from the air inlet device 56 and a compressor bleed air flow from the compressor air bleed structure 58. The BAM system 60 includes a flow mixing device 66 (e.g., see FIG. 4) and a compressor bleed air valve 68. FIG. 3 diagrammatically illustrates the flow mixing device 66 and the compressor bleed air valve 68 as independent components to facilitate the description herein. In some embodiments, the flow mixing device 66 and the compressor bleed air valve 68 may be combined as an integral device. Referring to FIGS, 5, 6, and 8, in some embodiments the BAM system 60 may also include an exterior air valve 70. As detailed herein, the exterior air valve 70 may be disposed in an open configuration or a closed configuration to control the flow of exterior air into the flow mixing device 66. FIGS. 5, 6, and 8 diagrammatically illustrate the exterior air valve 70 as an independent component to facilitate the description herein. In some embodiments, the exterior air valve 70 may be integrated into other components.

Air exiting the BAM system is referred to herein as "conditioned air". In some embodiments (e.g., see FIGS. 3 and 5-8), the BAM system 60 may include an exit valve 72 that is controllable to be in an open configuration and a closed configuration. In an open configuration, conditioned air is allowed to pass through the exit valve 72 to the turbine case clearance control segment(s) 46A. In the closed configuration, conditioned air is precluded from passing through the exit valve 72 to the turbine case clearance control segment(s) 46A. In a dually closed configuration with both the compressor bleed air valve 68 and the exit valve 72 closed, conditioned air is precluded from entering the air inlet device 56.

The compressor bleed air valve 68 is in fluid communication with the compressor air bleed structure 58. The compressor bleed air valve 68 is controllable to be in an open configuration or a closed configuration. In an open configuration, compressor bleed air is allowed to pass through to the flow mixing device 66. In the closed configuration, compressor bleed air is precluded from passing through to the flow mixing device 66. In some embodiments, the compressor bleed air valve 68 may be controlled to a plurality of open configurations to vary the volumetric flow rate of compressor bleed air to the flow mixing device 66; i.e., controllable to be in a 25% open configuration, or a 50% open configuration, or a 75% open configuration, and so on. The present disclosure system may be configured such that the volumetric flow rate of the compressor air bleed structure 58 is known at a given compressor bleed air valve 68 configuration (e.g., 100% open, 75% open, 50% open, and so on) under given engine 20 operational conditions; e.g., idle, take off, cruise, and so on.

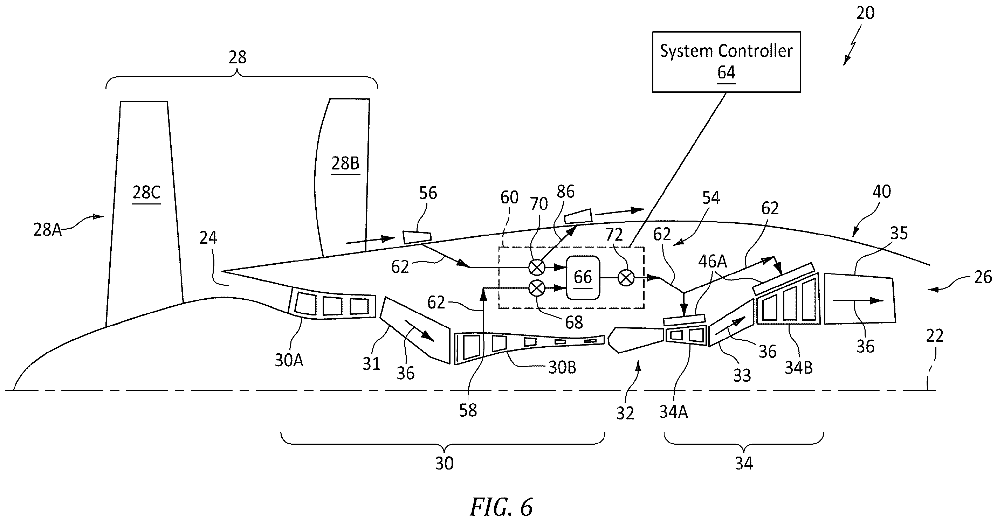

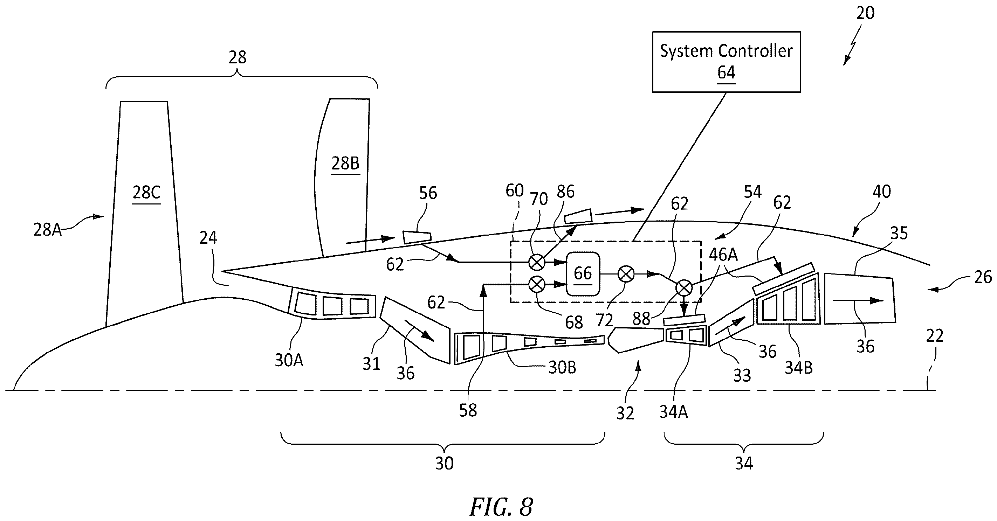

In those embodiments wherein the BAM system 60 includes an exterior air valve 70, the exterior air valve 70 may be controllable to be in an open configuration, or a closed configuration, or a divert configuration. In the open configuration, exterior air is allowed to pass through to the flow mixing device 66. In the closed configuration, exterior air is precluded from entering the flow mixing device 66. In some embodiments, the exterior air valve 70 may be controllable to vary the volumetric flow of exterior air through the exterior air valve 70 and into the flow mixing device 66; i.e., controllable to be in a 25% open configuration, or a 50% open configuration, or a 75% open configuration, and so on. In the divert configuration (e.g., see FIGS. 6 and 8), the exterior air valve 70 may be controlled to preclude exterior air from entering the flow mixing device 66 and direct the exterior air to exit the nacelle. The present disclosure system may be configured such that the volumetric flow rate of the exterior air flow through the air inlet device 56 is known at a given flow valve configuration (e.g., 100% open, 75% open, 50% open, and so on) under given engine 20 operating conditions; e.g., idle, take off, cruise, and so on.

FIG. 4 is a diagrammatic representation of a flow mixing device 66 that includes a hollow outer body 74 extending between an inlet end 76 and a discharge end 78. The flow mixing device 66 further includes an inner body 80 that is disposed within the hollow outer body 74 at the inlet end 76. The flow mixing device 66 may be described as having a first zone 82A, a second zone 82B, and a third zone 82C. The first zone 82A extends from the inlet end 76 to the second zone 82B; e.g., approximately the axial length of the inner body 80. The second zone 82B extends from the first zone 82A to the third zone 82C, and the third zone 82C extends from the second zone 82B to the discharge end 78. The inner body 80 is disposed within the hollow outer body 74 within the first zone 82A. The flow mixing device 66 is configured to receive exterior air flow within an annular region between the inner body 80 and the hollow outer body 74 at a pressure and temperature (P1, T1). The flow mixing device 66 is also configured to receive compressor bleed air flow within the inner body 80 at a pressure and temperature (P2, T2). A downstream end of the inner body 80 may be configured as a venturi 84. In the second zone 82B (immediately downstream of the inner body 80) and third zone 82C, the interior cavity of the hollow outer body 74 allows mixing of exterior air flow and compressor bleed air flow. In the second zone 82B, the venturi 84 exit of the inner body 80 prevents flow reversal into the lower pressure annular region (P2 > P1). The axial length of the third zone 82C is sufficient for the exterior air flow and compressor bleed air flow to adequately mix / normalize to a mixed flow pressure and temperature (P3, T3). The relative pressures and temperatures of the exterior air flow, the compressor bleed air flow, and the mixed flow are such that P1 < P3 < P2 and T1 < T3 < T2. The flow mixing device 66 diagrammatically illustrated in FIG. 4 and described above is an example of a flow mixing device 66 that may be used to mix an exterior air flow with a compressor bleed air flow. The present disclosure is not limited to this example.

The term "system controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the turbine ACC system 54 (or a system component) to accomplish the same algorithmically and/or coordination of system components. The system controller 64 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information.

The system controller 64 is shown in the FIGS. 3 and 5-8 and described herein as an independent component to facilitate the description. The system controller 64 may alternatively be integrated within another controller present with the gas turbine engine 20 (or aircraft) and that controller may be configured to perform the functionality detailed herein. The present disclosure is not limited to any particular controller architecture unless specifically stated herein.

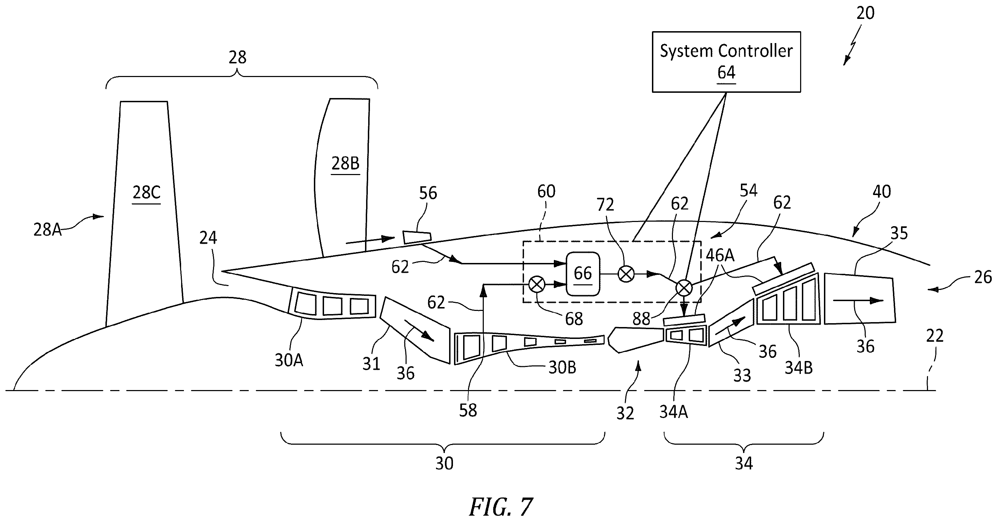

Additional system embodiments are shown in FIGS. 5-8. FIGS. 5 and 6 show the system illustrated in FIG. 3 and described above, now including an exterior air valve 70. In FIG. 6, a return conduit 86 is included to allow the return of exterior air to outside of the nacelle 40. As will be described in greater detail herein, embodiments of the present disclosure may provide conditioned air (i.e., the air exiting the flow mixing device 66) for cooling or heating purposes to one turbine section 34 (e.g., the HPT 34A or the LPT 34B) or more than one turbine section 34; e.g., both the HPT 34A and the LPT 34B. In the diagrammatic views shown in FIGS. 3 and 5-8, the present disclosure turbine ACC system 54 is shown in fluid connection with a turbine case clearance control segment 46A of the HPT 34A and a turbine case clearance control segment 46A of the LPT 34B. As shown in FIGS. 7 and 8, in those embodiments wherein the present disclosure turbine ACC system 54 is in fluid connection with the HPT 34A and the LPT 34B, the present disclosure turbine ACC system 54 may include a valve mechanism 88 that can be controlled to alter the amount of conditioned air flow to the respective turbine case clearance control segment 46A of the LPT 34B and the HPT 34A; e.g., during gas turbine operational segments, the valve mechanism 88 may be controlled to provide a flow of conditioned air to both the HPT 34A and LPT 34B turbine case clearance control segments 46A, or only to an HPT 34A turbine case clearance control segment 46A, or only to an LPT 34B turbine case clearance control segment 46A, or to vary the relative percentages of conditioned air flow provided to the HPT 34A and the LPT 34B turbine case clearance control segments 46A.

During certain operational segments of the gas turbine engine 20, the rotor stages 44 (see FIG. 2) in a turbine section 34 may "radially grow" resulting in the rotor blade tips 52 being disposed further outward in a radial direction than they were previously. The "radial growth" may be caused by centrifugal forces acting on the rotor stage 44 when it transitions from a first rotational velocity (RV1) to a higher second rotational (RV2; RV2 > RV1) and/or may be caused by a temporary thermal disparity between the rotor stage 44 and the turbine case clearance control segment 46A disposed radially outside of the rotor stage 44. The thermal disparity may occur during a transient phase when the power is substantially increased in the gas turbine engine 20 (e.g., from a taxiing state to a take-off state). The relatively fast increase in core gas temperature causes portions of the rotor stage 44 to thermally expand at a faster rate than the respective turbine case clearance control segment 46A. Engine efficiency is affected by blade tip clearance and therefore maintaining a minimum blade tip clearance is desirable for efficiency. However, if a "pinch" event occurs between the blade tips 52 and the blade outer air seal 46C of the turbine case clearance control segment 46A, undesirable blade tip 52 and/or blade outer air seal 46C wear can occur. The present disclosure turbine ACC system 54 provides a significant improvement to active blade tip clearance control that can be implemented during numerous gas turbine engine 20 operational segments.

During a gas turbine engine 20 operational segment wherein there is likely to be a thermal disparity between the rotor stage 44 and the turbine case clearance control segment 46A radially outside of the rotor stage 44, the present disclosure turbine ACC system 54 is configured to provide conditioned air at an elevated temperature and pressure to the turbine case clearance control segment 46A to mitigate the thermal disparity between the rotor stage 44 and the turbine case clearance control segment 46A. In this instance, the turbine ACC system 54 may be described as operating in a "turbine case heating mode". Exposing the turbine case clearance control segment 46A to the elevated temperature conditioned air will cause the turbine case clearance control segment 46A to heat up and thermally grow faster than it would otherwise, and thereby mitigate the potential for a pinch event.

Some embodiments of the present disclosure (e.g., see FIGS. 3 and 7) are selectively controllable (e.g., via the compressor bleed air valve 68 and executed instructions) to produce elevated temperature conditioned air that is a mixture of compressor bleed air and exterior air flow. The temperature of the conditioned air can be adjusted to a desired temperature and pressure by varying the volumetric flow rate of the compressor bleed air through the compressor bleed air valve 68, and consequently into the flow mixing device 66. In these embodiments, the volumetric flow rate of exterior air flow may not be volumetrically adjustable.

In some embodiments (e.g., see FIGS. 5, 6, and 8), the mixture of compressor bleed air and exterior air flow that produces the conditioned air may be produced by controlling the volumetric flow rate of both the compressor bleed air flow and the exterior air flow; e.g., the volumetric flow rate of the compressor bleed air flow can be altered by controlling the compressor bleed air valve 68 and the volumetric flow rate of the exterior air flow can be altered by controlling the exterior air valve 70. The ability of the present disclosure turbine ACC system 54 to produce elevated temperature conditioned air at a desired temperature and pressure is understood to be enhanced (e.g., a greater conditioned air temperature range) because the volumetric flow rate of both the compressor bleed air flow and the exterior air flow can be altered.

A benefit of the present disclosure turbine ACC system 54 is that the temperature of the conditioned air can be controlled in real time in response to changing engine 20 operating conditions. For example, during an initial transient phase when there is a considerable thermal disparity between the rotor stage 44 and the turbine case clearance control segment 46A radially outside of the rotor stage 44, the present disclosure turbine ACC system 54 can be controlled to provide conditioned air at a first temperature. As the thermal disparity between the rotor stage 44 and the turbine case clearance control segment 46A decreases, the present disclosure turbine ACC system 54 can be controlled to decrease the temperature of the conditioned air in real time. The lower temperature conditioned air may be selected to create a blade tip gap that is large enough to avoid a pinch condition, and also small enough to decrease leakage at the blade tip 52 and thereby improve engine 20 efficiency. In those embodiments that do not include an exterior air valve 70, the present disclosure ACC system can control the pressure and temperature of the conditioned air by controlling the volumetric flow of compressor bleed air via the compressor bleed air valve 68; e.g., the relative contribution of the compressor bleed air flow into the conditioned air. In those embodiments that include an exterior air valve 70, the present disclosure turbine ACC system 54 can control the pressure and temperature of the conditioned air by controlling one or both of the volumetric flow of compressor bleed air via the compressor bleed air valve 68 and the volumetric flow of exterior air flow via the exterior air valve 70. The present disclosure turbine ACC system 54 is also configured to judiciously use compressor bleed air. Air bled from the compressor section 30 is removed from the core gas path 36 and therefore is no longer available for entry into the combustion section 32 where it can be mixed with fuel and combusted to provide energy to drive the turbine sections. Hence, bleeding air from a compressor section 30 generally decreases the operating efficiency of the engine 20. The present disclosure ACC system is configured to tailor the amount of air bled from the compressor to satisfy the turbine clearance function at hand.

In some gas turbine engine 20 operational segments (e.g., cruise state at an elevated altitude) wherein the rotor stage 44 and the turbine case clearance control segment 46A are no longer in a transient mode, it may be beneficial to cool the turbine case clearance control segment 46A. Conditioned air at a temperature useful for cooling may be used to decrease the temperature of the turbine case clearance control segment 46A and thereby increase the useable life of the turbine case clearance control segment 46A components. Moreover, since environmental conditions (e.g., temperature) may vary considerable based on region climate, time of year, altitude, and the like, it may be beneficial to use a mixture of exterior cooling air flow and compressor bleed air flow to achieve a conditioned air temperature that is optimal for the operational parameters of a gas turbine engine 20 operational segment, including achieving a desirable blade tip clearance. In these instances, the present disclosure ACC system can be used to mix compressor bleed air flow and exterior air flow to produce a conditioned air flow temperature and pressure understood to create an optimal turbine case clearance control segment 46A thermal environment, blade tip clearance, and the like. In this instance, the turbine active clearance control system may be described as operating in a "turbine case cooling mode".

The control of the BAM system 60 may be based on compressor bleed air flow and/or exterior air flow parameter values; e.g., compressor bleed air flow pressure and/or temperature, exterior air flow pressure and/or temperature, or the like. These parameter values may be determined using appropriate sensors, or may be determined from other data, or may be acquired from data stored within a memory device (e.g., in communication with a system controller 64), or algorithmically determined, or any combination thereof.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An assembly, comprising:
a nacelle (40); and
a gas turbine engine (20) disposed within the nacelle (40), the gas turbine engine (20) comprising:
an open rotor propulsion system (28);
a compressor section (30);
a combustion section (32);
a turbine section (34) having a rotor stage (44) and a turbine case clearance control segment (46A) disposed radially outside of the rotor stage (44); and
a turbine active clearance control system (54) that includes a bleed air mixing system (60), an air inlet device (56) in fluid communication with an exterior wall of the nacelle (40) and configured to receive an exterior air flow, and a compressor air bleed structure (58) in fluid communication with the compressor section (30) to receive a compressor bleed air flow, wherein:
the turbine active clearance control system (54) is configurable in a turbine case heating mode in which the bleed air mixing system (60) is used to mix the exterior air flow and the compressor bleed air flow to produce a conditioned air flow that is operable to heat the turbine case clearance control segment (46A); and
the turbine active clearance control system (54) is configured to direct the conditioned air flow to the turbine case clearance control segment (46A).

2. The assembly of claim 1, wherein the bleed air mixing system (60) includes a flow mixing device (66) and a controllable compressor bleed air valve (68) in fluid communication with the compressor air bleed structure (58) and with the flow mixing device (66).

3. The assembly of claim 2, wherein the compressor bleed air valve (68) is controllable to vary a first volumetric flow rate of the compressor bleed air flow through the compressor bleed air valve (68) in a range between a fully open compressor bleed air valve configuration and a closed compressor bleed air valve configuration, including a plurality of partially open compressor bleed air valve configurations, and the first volumetric flow rate at each partially open compressor bleed air valve configuration is less than the first volumetric flow rate at the fully open compressor bleed air valve configuration and greater than the first volumetric flow rate at the closed compressor bleed air valve configuration.

4. The assembly of claim 2 or 3, wherein the bleed air mixing system (60) includes an exterior air valve (70) in fluid communication with the air inlet device (56) and with the flow mixing device (66).

5. The assembly of claim 4, wherein the exterior air valve (70) is controllable to vary a second volumetric flow rate of the exterior air flow through the exterior air valve (70) in a range between a fully open exterior air valve configuration and a closed exterior air valve configuration, including a plurality of partially open exterior air valve configurations, and the second volumetric flow rate at each partially open exterior air valve configuration is less than the second volumetric flow rate at the fully open exterior air valve configuration and greater than the second volumetric flow rate at the closed exterior air valve configuration.

6. The assembly of any preceding claim, wherein the turbine section (34) includes a high pressure turbine (HPT) section, and the rotor stage (44) includes a HPT rotor stage, and the turbine case clearance control segment (46A) includes a HPT case clearance control segment disposed radially outside of the HPT rotor stage, and the turbine active clearance control system (54) is configured to selectively direct the conditioned air flow to the HPT case clearance control segment.

7. The assembly of claim 6, wherein the turbine section (34) includes a low pressure turbine (LPT) section, and the rotor stage (44) includes an LPT rotor stage, and the turbine case clearance control segment (46A) includes a LPT case clearance control segment disposed radially outside of the LPT rotor stage, and the turbine active clearance control system (54) is configured to selectively direct the conditioned air flow to the LPT case clearance control segment.

8. The assembly of claim 7, wherein the turbine active clearance control system (54) includes a turbine section valve (88) controllable to pass the conditioned air flow solely to the HPT case clearance control segment, or solely to the LPT case clearance control segment, or to pass a first volumetric flow rate of the conditioned air flow to the HPT clearance control segment and a second volumetric flow rate of the conditioned air flow to the LPT case clearance control segment.

9. The assembly of claim 8, wherein the turbine section valve (88) is controllable to vary the first volumetric flow rate and the second volumetric flow rate.

10. The assembly of any preceding claim, wherein the open rotor propulsion system (28) includes an open rotor propulsion rotor with a plurality of rotor blades (50) and a plurality of stator vanes (28B) disposed aft of the open rotor propulsion rotor.

11. An assembly comprising:
a nacelle; and
a gas turbine engine (20) disposed within the nacelle (40), the gas turbine engine comprising:
an open rotor propulsion system (28);
a compressor section (30);
a combustion section (32);
a turbine section (34) having a rotor stage (44) and a turbine case clearance control segment (46A) disposed radially outside of the rotor stage (44); and
a turbine active clearance control system (54) that includes a bleed air mixing system (60), an air inlet device (56) in fluid communication with an exterior wall of the nacelle (40) to receive an exterior air flow, and a compressor air bleed structure (58) in fluid communication with the compressor section (30) to receive a compressor bleed air flow;
wherein:
the bleed air mixing system (60) includes a flow mixing device (66), a compressor bleed air valve (68), and an exterior air valve (70), and wherein the compressor bleed air valve (68) is in fluid communication with the compressor air bleed structure (58) and the flow mixing device (66), and the flow mixing device (66) is in fluid communication with the air inlet device (56);
the turbine active clearance control system (54) is configurable in a turbine case heating mode and in a turbine case cooling mode;
in the turbine case heating mode, the turbine active clearance control system (54) is configured to control the bleed air mixing system (60) to mix the exterior air flow and the compressor bleed air flow to produce a first conditioned air flow that is operable to heat the turbine case clearance control segment (46A);
in the turbine case cooling mode, the turbine active clearance control system (54) is configured to control the bleed air mixing system (60) to mix the exterior air flow and the compressor bleed air flow to produce a second conditioned air flow that is operable to cool the turbine case clearance control segment (46A); and
in the turbine case heating mode or in the turbine case cooling mode, the turbine active clearance control system (54) is configured to direct the first conditioned air flow or the second conditioned air flow to the turbine case clearance control segment (46A),
optionally wherein:
i) the compressor bleed air valve (68) is controllable to vary a first volumetric flow rate of the compressor bleed air flow through the compressor bleed air valve (68) in a range between a fully open compressor bleed air valve configuration and a closed compressor bleed air valve configuration, including a plurality of partially open compressor bleed air valve configurations, wherein the first volumetric flow rate at each partially open compressor bleed air valve configuration is less than the first volumetric flow rate at the fully open compressor bleed air valve configuration and greater than the first volumetric flow rate at the closed compressor bleed air valve configuration; and/or
ii) the exterior air valve (70) is controllable to vary a second volumetric flow rate of the exterior air flow through the exterior air valve (70) in a range between a fully open exterior air valve configuration and a closed exterior air valve configuration, including a plurality of partially open exterior air valve configurations, wherein the second volumetric flow rate at each said partially open exterior air valve configuration is less than the second volumetric flow rate at the fully open exterior air valve configuration and greater than the second volumetric flow rate at the closed exterior air valve configuration; and/or
iii) the turbine section (34) includes a high pressure turbine (HPT) section, and the rotor stage (44) includes a HPT rotor stage, and the turbine case clearance control segment (46A) includes a HPT case clearance control segment disposed radially outside of the HPT rotor stage, and the turbine active clearance control system (54) is configured to selectively direct the first conditioned air flow or the second conditioned air flow to the HPT case clearance control segment, and optionally:
the turbine section (34) includes a low pressure turbine (LPT) section, and the rotor stage (44) includes an LPT rotor stage, and the turbine case segment includes a LPT case segment disposed radially outside of the LPT rotor stage, and the turbine active clearance control system (54) is configured to selectively direct the first conditioned air flow or the second conditioned air flow to the LPT case segment; and further optionally:
the turbine active clearance control system (54) includes a turbine section valve controllable to pass the first conditioned air flow or the second conditioned air flow solely to the HPT case segment, or solely to the LPT case segment, or to pass a first volumetric flow rate of the first conditioned air flow or the second conditioned air flow to the HPT case segment and a second volumetric flow rate of the first conditioned air flow or the second conditioned air flow to the LPT case segment.

12. A method of actively controlling rotor tip clearance in a gas turbine engine (20) disposed in a nacelle (40), the gas turbine engine (20) including an open rotor propulsion system (28), a compressor section (30), a combustion section (32), and a turbine section (34) having a rotor stage (44) and a turbine case clearance control segment (46A) disposed radially outside of the rotor stage (44), the method comprising:
providing an exterior air flow extracted from an exterior of the nacelle (40) to a flow mixing device (66);
providing a compressor bleed air flow from the compressor section (30) to the flow mixing device (66);
using the flow mixing device (66) to mix the exterior air flow and the compressor bleed air flow to produce a conditioned air flow that is operable to heat the turbine case clearance control segment (46A); and
directing the conditioned air flow to heat the turbine case clearance control segment (46A).

13. The method of claim 12, wherein the step of providing the exterior air flow extracted from the exterior of the nacelle (40) to the flow mixing device (66) includes using an exterior air valve (70) to vary an exterior air volumetric flow rate into the flow mixing device (66).

14. The method of claim 12 or 13, wherein the step of providing the compressor bleed air flow from the compressor section (30) to the flow mixing device (66) includes using a compressor bleed air valve (68) to vary a compressor bleed air volumetric flow rate into the flow mixing device (66).

15. The method of any of claims 12 to 14, wherein the exterior air flow is provided at a first pressure level, and the compressor bleed air flow is provided at a second pressure level, and the conditioned air flow is produced at a third pressure level, wherein the second pressure level is greater than the first pressure level and the third pressure level, and the third pressure level is greater than the first pressure level.
